# EUROPÄISCHE PATENTSCHRIFT

(11) **EP 3 092 147 B1**
(45) Veröffentlichungstag und Bekanntmachung des Hinweises auf die Patenterteilung: **14.06.2023**
(21) Anmeldenummer: 14799439.6
(22) Anmeldetag: 17.11.2014
(51) Int. Cl.: B60L 53/16, B60L 53/18, B60L 53/30, B60L 53/35, B60L 53/36, H01R 13/631

(54) **ELEKTRISCHE LADEVORRICHTUNG, ELEKTRISCHE ANSCHLUSSVORRICHTUNG, SYSTEM UND VERFAHREN ZUM LADEN EINER BATTERIE EINES FAHRZEUGS**
ELECTRIC CHARGING DEVICE, ELECTRIC CONNECTION DEVICE, SYSTEM AND METHOD FOR CHARGING A VEHICLE BATTERY
DISPOSITIF DE CHARGE ÉLECTRIQUE, DISPOSITIF DE CONNEXION ÉLECTRIQUE, SYSTÈME ET PROCÉDÉ À CHARGER UNE BATTERIE DE VÉHICULE

(30) Priorität: 10.01.2014 DE 102014200290
(43) Veröffentlichungstag der Anmeldung: 16.11.2016
(73) Patentinhaber: Robert Bosch GmbH, 70442 Stuttgart (DE)
(72) Erfinder: KILIC, Ahmet, 71032 Boeblingen (DE); KUFNER, Annika Carolin, 91077 Neunkirchen am Brand (DE); SENGEBUSCH, Falco, Singapore 573943 (SG)
(86) Internationale Anmeldenummer: PCT/EP2014/074735
(87) Internationale Veröffentlichungsnummer: WO 2015/104080

(56) Entgegenhaltungen:
- CH-A5- 688 598
- CN-A- 103 425 073
- DE-A1-102009 015 603
- DE-A1-102010 028 126
- DE-A1-102011 082 092
- DE-U1-202009 010 275
- FR-A1- 2 688 350
- FR-A1- 2 688 350
- JP-A- 2005 255 144
- US-A- 5 306 999
- US-A- 5 306 999
- US-A- 5 495 159
- US-A- 5 495 159
- US-A1- 2010 235 006
- US-A1- 2011 066 515
- US-A1- 2011 181 241
- US-A1- 2011 181 241
- US-A1- 2013 076 902
- US-A1- 2013 076 902

## Beschreibung

Die vorliegende Erfindung betrifft eine elektrische Ladevorrichtung zum Laden einer Batterie eines Fahrzeugs, eine elektrische Anschlussvorrichtung eines Fahrzeugs zum Laden einer Batterie des Fahrzeugs, ein System zum Laden einer Batterie eines Fahrzeugs sowie ein Verfahren zum Laden einer Batterie eines Fahrzeugs.

### STAND DER TECHNIK

Hybrid- und Elektrofahrzeug greifen zumindest teilweise auf Batterien zurück, um ihren Antriebsstrang mit Energie zu versorgen. ist die Batterie eines Fahrzeugs entleert, kann sie an einer Ladestation mittels einer Ladevorrichtung erneut geladen werden.

Die möglichst automatische Positionierung des Fahrzeugs bezüglich der Ladevorrichtung und der möglichst automatische Anschluss der Ladevorrichtung an das Fahrzeug zum Laden der Batterie umfassen einige technische Herausforderungen. Automatisierte konduktive Ladesysteme benötigen eine präzise Hinführung eines Ladekopfes, beispielsweise eines Steckers, der Ladevorrichtung an einen Empfangskopf, beispielsweise einer Steckerbuchse, einer Anschlussvorrichtung an einem Fahrzeug.

Fahrzeuge weisen häufig aufgrund ihrer unterschiedlichen Designs unterschiedliche Positionen für den Empfangskopf auf. Auch durch eine Anordnung eines Empfangskopf am Unterboden des Fahrzeugs ist keine Einheitlichkeit gewährleistet, da Fahrzeuge unterschiedlich hoch sind und somit der Unterboden von Fahrzeugen unterschiedlich hoch von einer Grundfläche entfernt ist, auf der das Fahrzeug steht. Üblicherweise werden Fahrzeug von ihren Fahrzeugführern nur bis auf einen Fehler von etwa +-10cm präzise und teilweise auch schräg positioniert. Die Aufgabe der Hinführung des Ladekopfs an den Empfangskopf kann beispielsweise von technisch aufwändigen Robotern, etwa mit Zielerfassungs-, Mess- und Bildverarbeitungssystemen, bewältigt werden.

In der US 2011 066 515 A1 ist eine automatische Steckerstation zum Laden von Elektro- und Hybridfahrzeugen beschrieben. Das Fahrzeug wird dabei über einer Falltür positioniert. Ein Positionierungssystem erkennt die Position einer Steckerbuchse an dem Fahrzeug. Ein Stecker ist zum Ein- und Ausstecken in die bzw. aus der Steckerbuchse senkrecht aus- und einfahrbar und mit einer Energiequelle verbunden. Basierend auf der erkannten Position der Steckerbuchse an dem Fahrzeug ist der Stecker horizontal zweidimensional verschiebbar, sodass der Stecker beim senkrechten Ausfahren in die Steckerbuchse eintritt.

Die D1 (US 2013/076902 A1) betrifft eine Ladestation mit einer Apparatur zum Laden der Batterien von elektrischen Fahrzeugen, die aus einer Grundplatte, einer damit verbundenen Hebeeinrichtung und einem Roboterarm besteht. Der Roboterarm ragt von der Hebeeinrichtung weg und besitzt an dem von der Hebeeinrichtung entfernten Ende eine Einrichtung, die mit einem Steckergegenstück am Elektrofahrzeug gekoppelt werden kann. Der Roboterarm ist so ausgeführt, dass die Einrichtung am Ende des Roboterarms in drei Dimensionen bewegt werden kann.

Der Stand der Technik nach D2 (US 2011/181241 A1) betrifft ein Ladesystem, das zum Aufladen der Batterien von elektrisch betriebenen Kraftfahrzeugen mit einem Ladekopf mit mehreren Kontakten besonders geeignet ist, die mit einer Reihe von Buchsenkontakten an Bord des Fahrzeugs zusammenpassen. Der Ladekopf wird von oben gehalten und kann über ein kraftbetätigtes System auf die Buchsenkontakte an Bord des Fahrzeugs abgesenkt werden.

Der Stand der Technik nach D3 (US 5 306 999 A) betrifft eine Elektrofahrzeug-Ladestation zum Aufladen eines Elektrofahrzeugs. Die Elektrofahrzeug-Ladestation weist eine Basiseinheit mit einem elektrischen Steuerkasten auf, welcher mit einer elektrischen Zuleitung gekoppelt ist, und einem einziehbaren Stützarm mit einer elektrischen Zuleitung und einem elektrischen Steckverbinder. Dieser Arm kann sich zwischen einer zurückgezogenen Position und einer ausgefahrenen Position bewegen. Die Stützarmbaugruppe kann mit verschiedenen Tragarmen und / oder Verbindungen ausgestattet sein, die ihm vertikale und horizontale Bewegungen ermöglichen.

Der Stand der Technik D4 (US 5 495 159) betrifft ein Ladesystem für fahrerlose Fahrzeuge, wobei das Ladesystem über eine rotierbare Elektrodeneinheit verfügt, wobei die Elektrodeneinheit über einen Schaft mit der Ladebuchse des Fahrzeugs kontaktierbar ist, indem die Elektrodeneinheit um den Schaft rotiert wird und entsprechend ausgefahren wird, um den Kontakt zur Ladebuchse herzustellen.

### OFFENBARUNG DER ERFINDUNG

Die vorliegende Erfindung offenbart eine Ladevorrichtung mit den Merkmalen des Patentanspruchs 1.

Demgemäß ist eine elektrische Ladevorrichtung zum Laden einer Batterie eines Fahrzeugs vorgesehen, mit: einer Hebeeinrichtung, mit welcher ein Ladekopf gekoppelt ist; wobei der Ladekopf an oder auf einer ersten Oberfläche des Ladekopfs eine erste Mehrzahl von ersten elektrischen Kontakten aufweist, welche zum Laden der Batterie zumindest zum Teil mit einer Energiequelle verbindbar sind; einem Aktor, mittels welchem die Hebeeinrichtung derart aktuierbar ist, dass der Ladekopf zumindest teilweise in eine erste Richtung, welche im Wesentlichen senkrecht auf der ersten Oberfläche steht, bewegbar ist; wobei weiterhin die Hebeeinrichtung derart ausgebildet ist, dass der Ladekopf bei einem Stoßen in der ersten Richtung auf eine Anschlagsfläche durch fortgeführtes Aktuieren der Hebeeinrichtung durch den Aktor in eine zweite Richtung entlang der Anschlagsfläche bewegbar ist.

Weiterhin ist als Beispiel, um die Erfindung zu verstehen, eine elektrische Anschlussvorrichtung eines Fahrzeugs zum Laden einer Batterie des Fahrzeugs vorgesehen, mit: einem Empfangskopf, welcher an oder auf einer zweiten Oberfläche der Anschlussvorrichtung eine zweite Mehrzahl von zweiten elektrischen Kontakten aufweist; einer Führungseinrichtung zum Aufnehmen eines an die Anschlussvorrichtung angelegten und sich im Wesentlichen parallel zu der zweiten Oberfläche bewegenden Ladekopfs und zum Führen des sich bewegenden Ladekopfs und des Empfangskopfs in eine vorbestimmte Lagebeziehung zueinander; wobei, falls der Ladekopf und der Empfangskopf sich im Wesentlichen in der vorbestimmten Lagebeziehung zueinander befinden, die Batterie des Fahrzeugs über die zweiten elektrischen Kontakte ladbar ist.

Weiterhin ist als Beispiel, um die Erfindung zu verstehen, ein Ladesystem zum Laden einer Batterie eines Fahrzeugs vorgesehen mit:
einer außerhalb des Fahrzeugs installierten erfindungsgemäßen elektrischen Ladevorrichtung; und einer an dem Fahrzeug ausgebildeten erfindungsgemäßen elektrischen Anschlussvorrichtung; wobei der Ladekopf der Ladevorrichtung derart ausgebildet ist, dass er in die Führungseinrichtung der Anschlussvorrichtung einführbar ist und zum Laden der Batterie die ersten elektrischen Kontakte an die zweiten elektrischen Kontakte zumindest teilweise anlegbar sind.

Außerdem als Beispiel, um die Erfindung zu verstehen, ein Verfahren zum Laden einer Batterie eines Fahrzeugs vorgesehen mit:
Aktuieren einer Hebeeinrichtung mittels eines Aktors derart, dass ein mit der Hebeeinrichtung verbundener Ladekopf sich zumindest teilweise in eine erste Richtung bewegt, welche im Wesentlichen senkrecht auf einer ersten Oberfläche des Ladekopfs steht, wobei an der ersten Oberfläche eine erste Mehrzahl von ersten elektrischen Kontakten ausgebildet ist, welche zumindest teilweise mit einer Energiequelle verbunden sind; und weiterhin derart, dass, falls der Ladekopf in der ersten Richtung auf eine Anschlagsfläche stößt, sich der Ladekopf in eine zweite Richtung entlang der Anschlagsfläche bewegt; Führen des sich entlang der Anschlagsfläche bewegenden Ladekopfs mittels einer Führungseinrichtung in eine vorbestimmte Ladeposition bezüglich einem Empfangskopf mit zweiten elektrischen Kontakten; und Laden der Batterie des Fahrzeugs über die ersten und zweiten elektrischen Kontakte aus der Energiequelle.

### Vorteile der Erfindung

Die der vorliegenden Erfindung zu Grunde liegende Erkenntnis besteht darin, dass mit technisch geringem Aufwand ein System zum Laden einer Batterie eines Fahrzeugs bereitstellbar ist, welches mit einem Aktor, insbesondere mit genau einem einzigen Aktor, derart aktuierbar ist, dass bei einer Position des Fahrzeugs innerhalb eines vorbestimmten Bereichs um eine Ladevorrichtung ein Ladekopf der Ladevorrichtung automatisch zu einem Empfangskopf an dem Fahrzeug hingeführt wird. Das Fahrzeug kann in den vorbestimmten Bereich beispielsweise mittels eines Navigations- oder Parkassistenzsystems geleitet werden.

Der Aktor der erfindungsgemäßen Ladevorrichtung bewirkt, dass der an der Hebeeinrichtung befestigte Ladekopf zunächst an den Unterboden des Fahrzeugs angehoben wird und dann automatisch, an den Unterboden angepresst, an diesem entlang bewegt wird. Die Höhe des Unterbodens des Fahrzeugs muss weder bekannt sein noch muss sie einen bestimmten Wert annehmen. Vielmehr ist die Ladevorrichtung flexibel bei einer Vielzahl von Fahrzeugen ohne jegliche Anpassung einsetzbar. Es kann genügen, wenn die Höhe des Unterbodens Werte in einem bestimmten Wertebereich annimmt.

Vorteilhafterweise bewirkt ein einzelner Aktor eine lineare Bewegung eines Teils der Hebeeinrichtung, insbesondere eines Gleiters, welche ihrerseits die restliche Bewegung der Ladevorrichtung, wie oben beschrieben, bewirkt. Die Ladevorrichtung ist dadurch technisch besonders einfach, robust und zuverlässig.

Das Laden an der Unterseite des Fahrzeugs hat den Vorteil, dass störende Interaktion mit dem Ladesystem bzw. mit der Ladevorrichtung erschwert ist. Weiterhin ist die Designfreiheit der Fahrzeughersteller durch diese Lösung nicht eingeengt.

Erfindungsgemäß ist an dem Fahrzeug eine Anschlussvorrichtung derart ausgebildet, dass der auf sie auftreffende, sich bewegende Ladekopf auch bei einem gewissen seitlichen Versatz zu der vorbestimmten Ladeposition des Ladekopfs bezüglich des Empfangskopf hingeführt wird. Auf Seiten der Anschlussvorrichtung geschieht dies rein mechanisch ohne elektronische Elemente. Auf Seiten der Ladevorrichtung wird vorzugsweise weiterhin nur der einzige Aktor verwendet.

Vorteilhafte Ausführungsformen und Weiterbildungen ergeben sich aus den Unteransprüchen sowie aus der Beschreibung unter Bezugnahme auf die Figuren.

Gemäß der Erfindung der elektrischen Ladevorrichtung sind die ersten elektrischen Kontakte als zueinander parallele, senkrecht auf der ersten Oberfläche stehende Lamellen ausgebildet. Die ersten Kontakte sind hierdurch besonders stabil mit entsprechenden Kontakten einer Anschlussvorrichtung kontaktierbar.

Gemäß einer weiteren bevorzugten Weiterbildung weist zumindest eine der Lamellen eine unterschiedliche Länge im Vergleich zu den restlichen Lamellen auf. Die Kontaktierung kann durch Einschieben der Lamellen in Führungsschlitze mit Kontakten längs der Lamellen erfolgen. Durch die unterschiedliche Länge der zumindest einen Lamelle kann die Kontaktierung dieses ersten Kontakts früher, später, länger oder kürzer erfolgen als die Kontaktierung der restlichen ersten Kontakte.

Gemäß einer weiteren bevorzugten Weiterbildung ist zumindest eine der Lamellen in einer Richtung längs der Lamellen versetzt von den restlichen Lamellen angeordnet. Durch die unterschiedliche Länge der zumindest einen Lamelle kann die Kontaktierung dieses ersten Kontakts früher oder später erfolgen als die Kontaktierung der restlichen ersten Kontakte.

Gemäß einer weiteren bevorzugten Weiterbildung ist der Ladekopf über einen ersten Arm mit der Hebeeinrichtung gekoppelt; wobei der erste Arm an einem ersten Ende über eine erste Feder mit dem Ladekopf gekoppelt ist; und an einem zweiten Ende über eine zweite Feder mit der restlichen Hebeeinrichtung gekoppelt ist. Hierdurch kann der Ladekopf mittels einer Rückstellkraft an die Anschlagsfläche des Fahrzeugs pressbar und gleichzeitig entlang der Anschlagsfläche bewegbar sein. Gleichzeitig wird vermieden, dass der Ladekopf zu stark an die Anschlagsfläche gepresst werden kann oder dass er aufgrund seines Gewichts nicht an die Anschlagsfläche emporgehoben werden kann.

Gemäß einer weiteren bevorzugten Weiterbildung sind der Aktor und die Hebeeinrichtung derart ausgebildet, dass die Hebeeinrichtung zum Bewegen des Ladekopfs dadurch aktuierbar ist, dass eine lineare Bewegung eines Gleiters der Hebeeinrichtung durch den Aktor bewirkt wird. Lineare Bewegungen sind besonders einfach und leicht zu kontrollieren. Die dazu benötigten technischen Elemente sind einfach, technisch wenig aufwändig, robust und zuverlässig.

Gemäß einer bevorzugten Weiterbildung der erfindungsgemäßen Anschlussvorrichtung sind die zweiten elektrischen Kontakte parallel zueinander, in einer Richtung parallel zu der zweiten Oberfläche, beabstandet angeordnet. Hierdurch sind Ladeköpfe mit zueinander parallel angeordneten ersten Kontakten für die Kontaktierung der Anschlussvorrichtung verwendbar.

Gemäß einer weiteren bevorzugten Weiterbildung ist der Empfangskopf bezüglich des Fahrzeugs bewegbar ausgebildet und über mindestens eine Feder mit dem Fahrzeug verbunden. Die mindestens eine Feder kann eine Rückstellkraft bei Auslenkungen des Empfangskopfs aus einer Ruhelage ausüben. Hierdurch kann die Anschlussvorrichtung automatisch so verschoben werden, dass der Ladekopf und der Empfangskopf in die vorbestimmte Lagebeziehung zueinander bringbar sind, das heißt dass die ersten und zweiten Kontakte einander kontaktieren können.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### KURZE BESCHREIBUNG DER ZEICHNUNGEN

Die vorliegende Erfindung wird nachfolgend anhand der in den schematischen Figuren der Zeichnungen dargestellten Ausführungsbeispiele näher erläutert. Es zeigen:
- Fig. 1A: eine schematische Seitenansicht einer elektrischen Ladevorrichtung zum Laden einer Batterie eines Fahrzeugs gemäß einer ersten Ausführungsform eines ersten Aspekts der vorliegenden Erfindung in einem ersten Zustand;
- Fig. 1B: eine schematische Seitenansicht einer elektrischen Ladevorrichtung zum Laden einer Batterie eines Fahrzeugs gemäß der ersten Ausführungsform des ersten Aspekts der vorliegenden Erfindung in einem zweiten Zustand;
- Fig. 2: zeigt eine schräge Draufsicht auf die Ladevorrichtung gemäß der ersten Ausführungsform des ersten Aspekts der vorliegenden Erfindung;
- Fig. 3: eine Detailansicht des Ladekopfs der Ladevorrichtung gemäß der ersten Ausführungsform des ersten Aspekts der vorliegenden Erfindung;
- Fig. 4A: eine schematische Draufsicht von unten auf eine elektrische Anschlussvorrichtung eines Fahrzeugs zum Laden einer Batterie des Fahrzeugs gemäß einer ersten Ausführungsform eines zweiten Aspekts der vorliegenden Erfindung;
- Fig. 4B: eine schematische Draufsicht von oben auf die elektrische Anschlussvorrichtung eines Fahrzeugs zum Laden einer Batterie des Fahrzeugs gemäß der ersten Ausführungsform des zweiten Aspekts der vorliegenden Erfindung;
- Fig. 4C: eine schematische Draufsicht von vorne auf eine elektrische Anschlussvorrichtung eines Fahrzeugs zum Laden einer Batterie des Fahrzeugs gemäß der ersten Ausführungsform des zweiten Aspekts der vorliegenden Erfindung;
- Fig. 5A: eine schematische Detailansicht von oben auf den Empfangskopf der Anschlussvorrichtung gemäß der ersten Ausführungsform des zweiten Aspekts der vorliegenden Erfindung;
- Fig. 5B: eine schematische Detailansicht von vorne auf den Empfangskopf der Anschlussvorrichtung gemäß der ersten Ausführungsform des zweiten Aspekts der vorliegenden Erfindung;
- Fig. 6: ein schematisches Flussdiagramm eines erfindungsgemäßen Verfahrens gemäß einem dritten Aspekt der vorliegenden Erfindung;
- Fig. 7: eine elektrische Ladevorrichtung eines Fahrzeugs zum Laden einer Batterie des Fahrzeugs gemäß einer zweiten Ausführungsform des ersten Aspekts der vorliegenden Erfindung; und
- Fig. 8: eine elektrische Anschlussvorrichtung eines Fahrzeugs zum Laden einer Batterie des Fahrzeugs gemäß einer zweiten Ausführungsform des zweiten Aspekts der vorliegenden Erfindung.

In allen Figuren sind gleiche bzw. funktionsgleiche Elemente und Vorrichtungen - sofern nichts anderes angegeben ist - mit denselben Bezugszeichen versehen.

### BESCHREIBUNG DER AUSFÜHRUNGSBEISPIELE

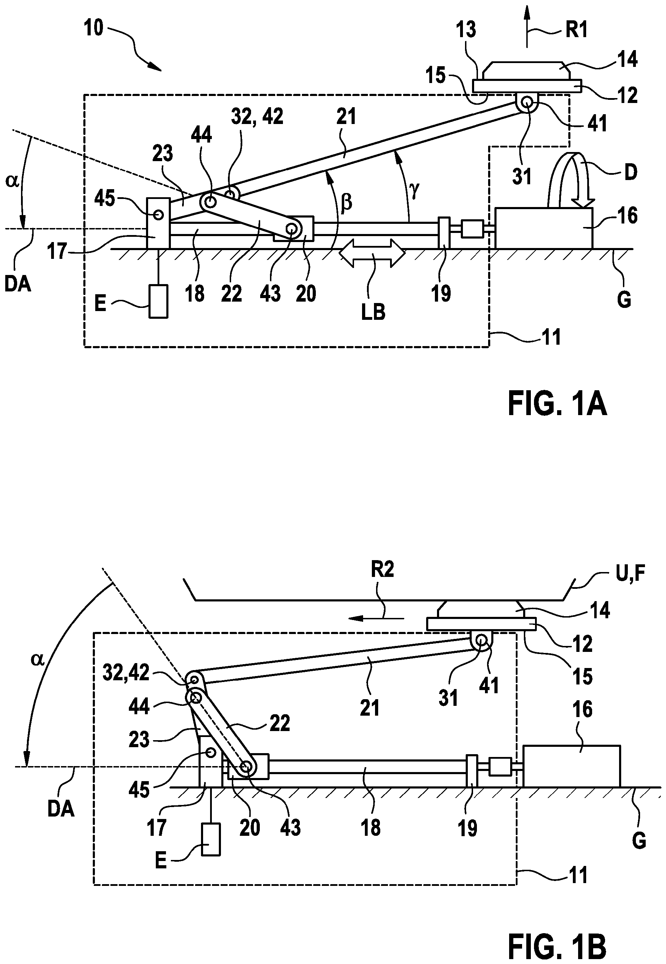

Fig. 1A zeigt eine schematische Seitenansicht einer elektrischen Ladevorrichtung 10 zum Laden einer Batterie eines Fahrzeugs gemäß einer ersten Ausführungsform eines ersten Aspekts der vorliegenden Erfindung in einem ersten Zustand.

Ein Ladekopf 12 weist an einer ersten Oberfläche 13 des Ladekopfs 12 eine erste Mehrzahl von elektrischen Kontakten 14 auf. Die elektrischen Kontakte 14 sind als zueinander parallele, senkrecht auf der ersten Oberfläche 13 stehende Lamellen ausgebildet. Die Lamellen sind, von der Seite her gesehen, trapezförmige Streifen, wobei jeweils die längere der beiden parallelen Seiten der Trapeze mit der ersten Oberfläche 13 verbunden ist. Die Ladevorrichtung 10 ist auf einer Grundfläche G, beispielsweise dem Erdboden, einem Fußboden, einem Fahrzeugboden oder einer sonstigen geeigneten ebenen Fläche, aufgestellt. Vorteilhaft ist ein Anbringen der Ladevorrichtung 10 auf einer im Vergleich zum Erdboden abgesenkten und zu diesem parallelen Fläche oder in einer Versenkung etwa im Boden eines Parkplatzes. Bei einer weiterhin vorteilhaften Ausbildung der Ladevorrichtung 10 in einem Fach oder einer Aushöhlung in einer Bodenwelle kann die Ladevorrichtung 10 beispielsweise vor Regenwasser bei Pfützenbildung geschützt sein. Die erste Oberfläche 13 ist im Wesentlichen parallel zu der Grundfläche G und weist von dieser fort. Bei einer Aufstellung auf dem Erdboden weist die erste Oberfläche 13 also nach oben.

Der Ladekopf 12 ist an eine Hebeeinrichtung 11 gekoppelt, welche mittels eines Aktors 16 aktuierbar ist, um den Ladekopf 12 zu bewegen. Der Ladekopf 12 ist über einen ersten Arm 21 als Teil der Hebeeinrichtung 11 mit der restlichen Hebeeinrichtung 11 drehbar gekoppelt. Der Ladekopf 12 ist über ein erstes Drehgelenk 41 mit einer ersten Torsionsfeder 31 an ein erstes Ende des ersten Arms 21 derart gekoppelt, dass die Achse der ersten Torsionsfeder 31 parallel zu der ersten Oberfläche 13 liegt. Das erste Drehgelenk 41 ist an einer Seitenfläche 15 des Ladekopfs 12 ausgebildet, welche von der ersten Oberfläche 13 abgewandt ist. Mittels der ersten Torsionsfeder 31 ist der Ladekopf 12 um die Achse der ersten Torsionsfeder in einem ersten Winkelbereich kippbar, wobei in der Ruhelage die erste Oberfläche 13 parallel zu der Grundfläche G liegt. Der erste Winkelbereich liegt zwischen -90° und +90°, vorteilhafterweise zwischen -45° und +45°, insbesondere zwischen -30° und +30°. Der erste Arm 21 ist an einem zweiten Ende des ersten Arms 21 mittels einer zweiten Torsionsfeder 32 an einem zweiten Gelenk 42 mit der restlichen Hebeeinrichtung 11 drehbar gekoppelt. Die Drehachse des zweiten Drehgelenks 42 ist parallel zu der Drehachse des ersten Drehgelenks 41.

Der Aktor 16 ist gemäß der ersten Ausführungsform als Elektromotor zum Drehen einer Welle W ausgebildet. Die Welle W ist schlüssig mit einer Führung 18 der Hebeeinrichtung 11 verbunden, welche als dünner Voll- oder Hohlzylinder mit teilweise einem Schraubengewinde am Außenmantel ausgebildet ist. Auf die Führung 18 ist ein Gleiter 20 der Hebeeinrichtung 11 mittels eines inneren Schraubengewindes montiert, welches in das Schraubengewinde der Führung 18 eingreift.

An dem Gleiter 20 sind zwei zweite Arme 22 der Hebeeinrichtung 11 an jeweils ersten Enden der zweiten Arme 22 über zwei dritte Drehgelenke 43 drehbar montiert. Die Drehachsen der dritten Drehgelenke 43 sind kollinear und parallel zu den Drehachsen des ersten und zweiten Drehgelenks 41, 42. An jeweils zweiten Enden der zweiten Arme 22 sind die zweiten Arme 22 über mindestens ein viertes Drehgelenk 44 mit einem dritten Arm 23 der Hebeeinrichtung 11 drehbar gekoppelt. Der dritte Arm 23 ist an einem ersten Ende des dritten Arms 23 über das zweite Drehgelenk 42 mit der zweiten Torsionsfeder 32 mit dem ersten Arm 21 drehbar gekoppelt. Das vierte Drehgelenk 44 ist an dem dritten Arm 23 zwischen dem ersten Ende des dritten Arms 23 und einem zweiten Ende des dritten Arms angeordnet. Das vierte Drehgelenk 44 befindet sich vorzugsweise näher an dem ersten Ende des dritten Arms 23 als an dem Mittelpunkt zwischen dem ersten und zweiten Ende des dritten Arms 23 und auch näher an dem ersten Ende als an dem zweiten Ende des dritten Arms 23. Die Drehachse des vierten Drehgelenks 44 ist parallel zu den Drehachsen der ersten, zweiten und dritten Drehgelenke 41, 42, 43.

An dem zweiten Ende des dritten Arms 23 ist der dritte Arm 23 mit einem ersten Lagerblock 17 der Hebeeinrichtung 11 über ein fünftes Drehgelenk 45 drehbar gekoppelt. In dem ersten Lagerblock 17 ist drehbar die Führung 18 an einem ersten Ende der Führung 18 gelagert, wobei die Führung an dem gelagerten Abschnitt ihres Außenmantels kein Schraubgewinde aufweist. Der Lagerblock 17 ist fest mit der Grundfläche G verbunden. Die Drehachse des fünften Drehgelenks 45 ist parallel zu den Drehachsen der ersten, zweiten, dritten und vierten Drehgelenke 41, 42, 43, 44. Die Drehachse DA der Führung 18 - und damit gleichzeitig der Winde W - liegt in einer denkbaren Ebene, welche senkrecht auf den Drehachsen aller Drehgelenke 41, 42, 43, 44, 45 liegt.

Durch die Verbindung des Gleiter 20 über das dritte Gelenk 43, den zweiten Arm 22, das vierte Gelenk 44, den dritten Arm 23, das fünfte Gelenk 45 und den Lagerblock 17 ist der Gleiter 20 auch bei einem Drehen D der Welle W und der Führung 18 durch den Aktor 16 nicht an seinem Schraubgewinde um die Führung 18 drehbar, sondern führt bei dem Drehen D stattdessen eine lineare Bewegung LB aus. Die lineare Bewegung LB kann zwischen dem ersten Lagerblock 17 und einem zweiten Lagerblock 19 stattfinden. Der Gleiter 20 kann sich von dem ersten Lagerblock 17 höchstens so weit entfernen, wie es die kombinierte Länge des zweiten und dritten Arms 22, 23 erlauben. An dem zweiten Lagerblock 19 ist die Führung 18 an einem zweiten Ende der Führung 18 drehbar gelagert und mit der Welle W verbunden.

Die ersten elektrischen Kontakte 14 sind über mindestens ein Kabel zumindest teilweise mit einer Energiequelle E verbunden. Zumindest einer der ersten elektrischen Kontakte 14 kann auch über ein weiteres Kabel mit einer ersten Steuereinrichtung der Ladevorrichtung 10 verbunden sein. Mittels dieses ersten Kontakts 14 sind somit Steuer- und/oder Datensignale an das zu ladende Fahrzeug übertragbar. Ein oder mehrere der Kabel können im Inneren des als Hohlprofil ausgebildeten ersten Arms 21 sowie im Inneren des als Hohlprofil ausgebildeten dritten Arms 23 verlaufen und über das Innere des Lagerblocks 17 mit der unter der Grundfläche G angeordneten Energiequelle verbunden sein. Ein oder mehrere Kabel können auch außen an den Armen 21 und/oder 23 entlang geführt werden. Das Kabel kann dabei vorteilhafterweise nur an zwei Punkten an den Armen 21, 23 fixiert werden, sodass es locker genug ist, um Beug- und/oder Streckbewegungen der Arme relativ zueinander zuzulassen. Die Energiequelle E kann gleichzeitig die Energie für den Aktor 16, hier einen elektrischen Drehmotor, bereitstellen.

In Fig. 1A ist ein Zustand gezeigt, in welchem der Gleiter 20 durch das Drehen D der Welle W als Aktuieren der Hebeeinrichtung 11 linear von dem zweiten Lagerblock 19 in Richtung des ersten Lagerblock 17 bewegt wurde. Je weiter sich der Gleiter 20 dem erste Lagerblock 17 nähert, desto mehr hebt sich der zweite Arm 22 aus einer Lage parallel zu der Führung 18. Das heißt, ein Winkel α zwischen dem zweiten Arm 22 als erstem Schenkel und der Drehachse DA der Führung 18 als zweitem Schenkel mit den dritten Drehgelenken 43 als Scheitelpunkt vergrößert sich von im Wesentlichen 0° bei maximaler Entfernung des Gleiters 20 von dem ersten Lagerblock 17 auf einen Maximalwert des Winkels α bei minimaler Entfernung des Gleiters 20 zu dem ersten Lagerblock 17. Dadurch wird auch der dritte Arm 23 aufgerichtet. Ein Winkel β zwischen der Grundfläche G als erstem Schenkel und dem dritten Arm 23 als zweitem Schenkel und/oder ein Winkel γ zwischen der Führung 18 als erstem Schenkel und dem dritten Arm 23 als zweitem Schenkel kann sich dabei z.B. von 0° auch auf über 90° vergrößern.

Da der dritte Arm 23 über die zweite Torsionsfeder 32 an den ersten Arm 21 gekoppelt ist, wird durch das Drehen D weiterhin der erste Arm 21 mit dem Ladekopf 12 bewegt. Die Federhärte der zweiten Torsionsfeder 32 ist dabei in Bezug auf das Gewicht des ersten Arms 21 und des Ladekopfs 12 so eingestellt, dass der erste Arm 21 sich zunächst im Wesentlichen wie eine Verlängerung des dritten Arms 23 mit diesem hebt. Der erste Arm 21 ist länger als der zweite Arm 23 ausgebildet, beispielsweise dreimal so lang. Damit bewegt sich der Ladekopf 12 an dem ersten Ende des ersten Arms 21 aufgrund des Drehens D zunächst auf einer Kreisbahn mit einer kleinen Auslenkung in Bezug auf die Grundfläche, also teilweise, vorzugsweise hauptsächlich in eine erste Richtung R1, welche senkrecht auf der ersten Oberfläche 13 steht. Ist die Grundfläche G der Erdboden, bewegt sich der Ladekopf 12 also hauptsächlich nach oben.

Fig. 1B zeigt eine schematische Seitenansicht einer elektrischen Ladevorrichtung 10 zum Laden einer Batterie eines Fahrzeugs gemäß dem ersten Aspekt der vorliegenden Erfindung in einem zweiten Zustand.

Bei dem erfindungsgemäßen Einsatz der Ladevorrichtung 10 ist oberhalb der Ladevorrichtung 10 ein Fahrzeug F mit einem Unterboden U in zunächst unbekannter Höhe positioniert. Trifft der Ladekopf 12 während seiner Bewegung, wie in Bezug auf Fig. 1A beschrieben, den Unterboden U als Anschlagsfläche, ist die Bewegung in die erste Richtung R1 gehemmt. Der Ladekopf 12 wird dann aufgrund der weiteren Bewegung des dritten Arms 23 an den Unterboden U angepresst entlang einer zweiten Richtung R2 bewegt, welche im Wesentlichen parallel zu der ersten Oberfläche 13 und senkrecht zu der ersten Richtung R1 angeordnet ist.

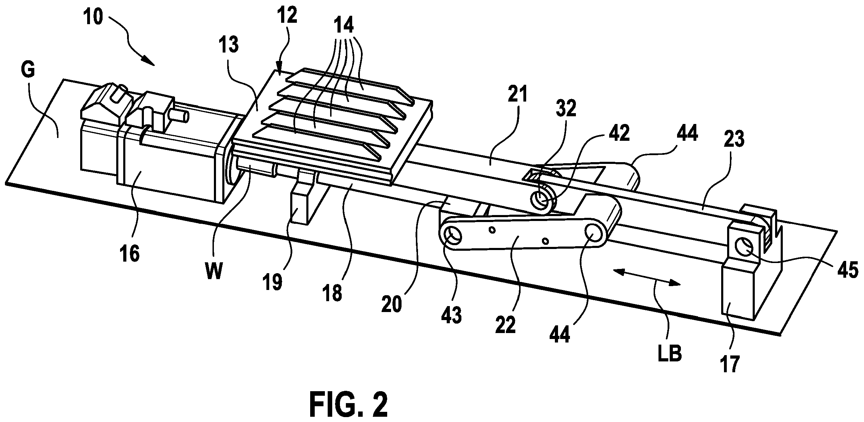

Fig. 2 zeigt eine schräge Draufsicht auf die Ladevorrichtung 10 gemäß dem ersten Aspekt der vorliegenden Erfindung.

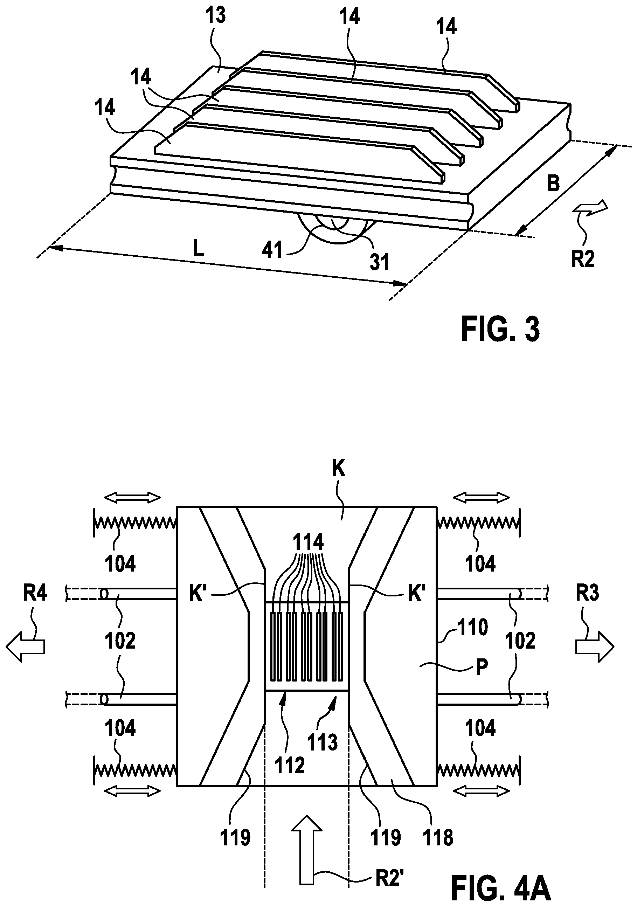

Fig. 3 zeigt eine Detailansicht des Ladekopfs 12 der Ladevorrichtung 10 gemäß dem ersten Aspekt der vorliegenden Erfindung.

An der ersten Oberfläche 13 des Ladekopfs 12 mit der Breite B und der Länge L ist eine erste Mehrzahl von ersten elektrischen Kontakten 14 ausgebildet. Die ersten Kontakte 14 sind als parallel zueinander und zu der Länge L des Ladekopfs 12 angeordnete Lamellen ausgebildet, welche senkrecht auf der ersten Oberfläche 13 stehen. Erfindungsgemäß wird der Ladekopf 12 entlang der zweiten Richtung R2 parallel zu den Lamellen und der Länge L an eine Anschlussvorrichtung 110 herangeführt.

Die Lamellen der ersten Kontakte 14 können, zum Teil oder alle, unterschiedlich lang sein. Sie können auch entlang der zweiten Richtung R2, zum Teil oder alle, versetzt voneinander angeordnet sein. Dadurch kann sich bei dem Heranführen des Ladekopfs 12 an die Anschlussvorrichtung 110 eine zeitlich versetzte Kontaktierung und/oder Dekontaktierung der verschiedenen ersten elektrischen Kontakte 14 ergeben. Beispielsweise kann ein elektrischer erster Kontakt 14, welcher mit einer ersten Steuereinrichtung der Ladevorrichtung 10 verbunden ist, zuerst mit einem zweiten elektrischen Kontakt der Anschlussvorrichtung 110 kontaktiert werden, welcher mit einer zweiten Steuereinrichtung der Anschlussvorrichtung 110 verbunden ist. Wird dabei beispielsweise von einer der Steuereinrichtungen ein Abbruchsignal ausgegeben, kann etwa der Aktor 16 von der ersten Steuereinrichtung gesteuert werden, den Drehsinn des Drehens D umzukehren.

Die Ladevorrichtung kann flexibel zum Laden mit Gleichstrom oder mit Wechselstrom ausgebildet sein. Informationen darüber, ob mit Gleich- oder Wechselstrom oder einer sonstigen Art von Strom geladen werden soll, können etwa bei der zeitlich ersten Kontaktierung eines ersten Kontakts 14 übermittelt werden.

Gemäß Fig. 3 sind fünf erste Kontakte 14 an dem Ladekopf 12 ausgebildet, das heißt die erste Mehrzahl beträgt fünf. Alternativ kann die erste Mehrzahl aber auch beispielsweise sieben oder mehr, betragen. Fünf und sieben Kontakte können dabei aktuelle Normen für 1- und 3-phasiges Laden mit Gleichstrom erfüllen. Die Mehrzahl kann auch geradzahlig sein und beispielsweise vier oder sechs betragen. Einer oder mehrere der ersten Kontakte 14 können zum Übertragen von Daten- und/oder Steuersignalen, als Erdleitung, als Hochspannungsleitung, als Niederspannungsleitung etc. ausgebildet sein.

Fig. 4A zeigt eine schematische Draufsicht von unten auf eine elektrische Anschlussvorrichtung 110 eines Fahrzeugs zum Laden einer Batterie des Fahrzeugs gemäß einer ersten Ausführungsform des zweiten Aspekts der vorliegenden Erfindung. Die Anschlussvorrichtung 110 gemäß der ersten Ausführungsform des zweiten Aspekts und die Ladevorrichtung 10 gemäß der ersten Ausführungsform des ersten Aspekts können gemeinsam eine Ausführungsform des erfindungsgemäßen Ladesystems darstellen.

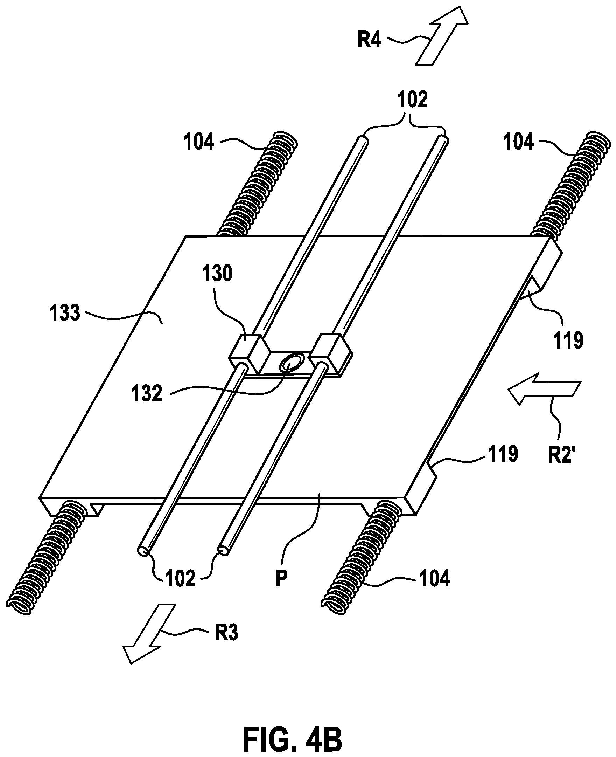

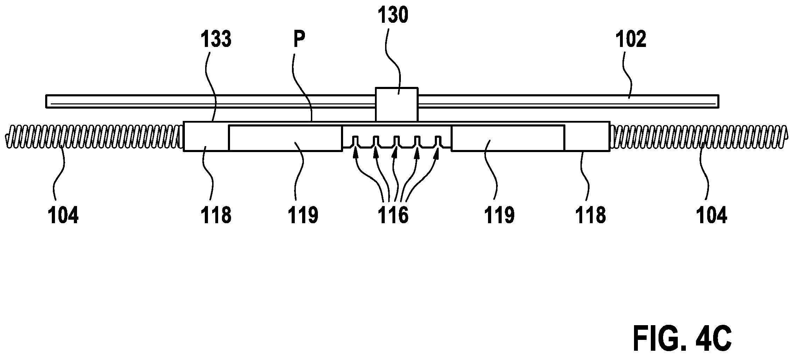

Die Anschlussvorrichtung 110 ist am Unterboden U des Fahrzeugs angeordnet. Eine Platte P der Anschlussvorrichtung 110 ist derart an oder um zwei parallel zueinander angeordneten Stäben 102 gelagert, dass sie entlang der Stäbe 102 verschiebbar ist. Über die Stäbe 102 ist die Anschlussvorrichtung 110 mit dem restlichen Fahrzeug verbunden. Die Stäbe 102 können innen hohl sein. Kabel können innerhalb der Stäbe 102 zwischen dem Fahrzeug, insbesondere einer Batterie des Fahrzeugs, und der Anschlussvorrichtung verlaufen und diese elektrisch aneinander ankoppeln. Die Verschiebbarkeit der Platte P auf den Stäben 102 wird durch mindestens eine, parallel zu den Stäben 102 angeordnete Feder 104 vermindert. Gemäß Fig. 4 üben vier Federn 104 eine Rückstellkraft derart aus, dass sich in der Ruhelage die Platte P in der Mitte der Stäbe 102 und gleichzeitig auf der Längsachse des Fahrzeugs liegt. Mit Rückstellkraft ist eine Federkraft gemeint, welche einer Auslenkung der Platte P und damit auch des Empfangskopfs 112 aus deren jeweiliger Ruhelage entgegen wirkt.

Gemäß der beschriebenen Ausführungsform des zweiten Aspekts ist an Platte P der Anschlussvorrichtung 110 ein Empfangskopf 112 ausgebildet, welcher eine zweite Mehrzahl von zweiten elektrischen Kontakten 114 auf einer zweiten Oberfläche 113 der Platte P aufweist. Über die Kabel innerhalb der Stäbe 102 sind die zweiten elektrischen Kontakte 114 zumindest teilweise mit der Batterie des Fahrzeugs elektrisch verbunden. Ein oder mehrere zweite Kontakte114 können auch mit einer Steuereinrichtung des Fahrzeugs verbunden sein, mittels welcher das Laden der Batterie steuerbar ist.

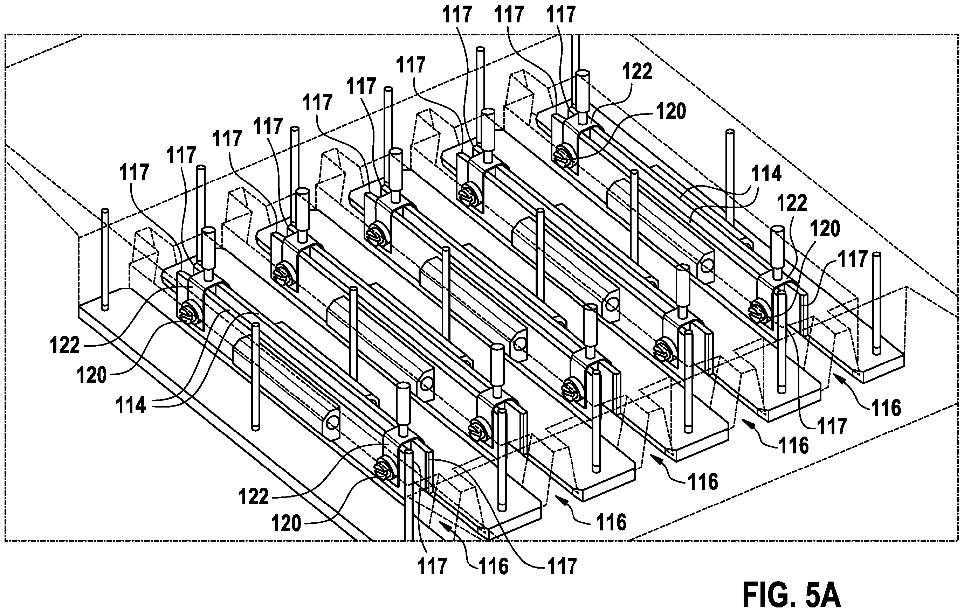

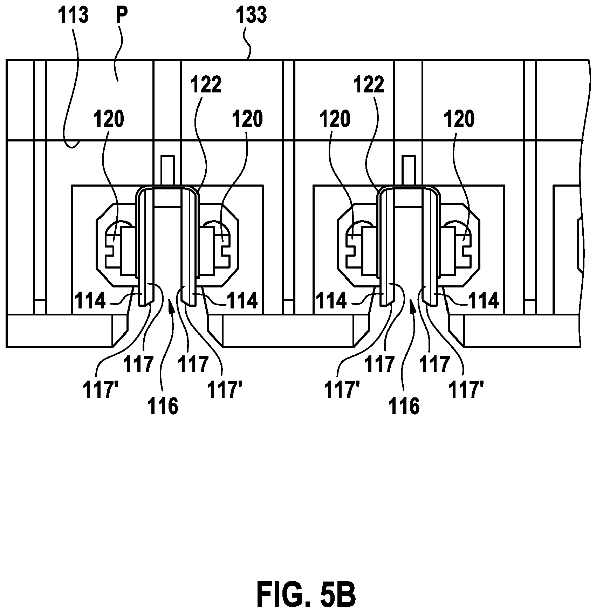

Die zweite Oberfläche 113 ist von dem Fahrzeug abgewandt. Der Empfangskopf 112 ist von einer Führungseinrichtung 118 auf der zweiten Oberfläche 113 der Platte P umgeben, welche dazu dient, einen Ladekopf 12 einer erfindungsgemäßen Ladevorrichtung 10 in eine vorbestimmte Ladeposition bezüglich des Empfangskopfs 112 zu führen. Gemäß der in Bezug auf Fig. 5 beschriebenen Ausführungsform des zweiten Aspekts der vorliegenden Erfindung ist die Führungseinrichtung 118 bei Draufsicht als "dreistufig symmetrisch sanduhrförmig" beschreibbar, wobei sich der Empfangskopf 112 in der jüngsten Stelle in der Mitte der Sanduhr befindet. Die Führungseinrichtung 118 bildet also einen Kanal K, welcher sich in Richtung des Empfangskopfs 112 an beiden Enden des Kanals V-förmig oder trichterförmig verjüngt, bis die Breite des Kanals K im Wesentlichen der Breite des Empfangskopfs 112 entspricht. Die Breite des Empfangskopfs 112 ist im Wesentlichen gleich der Breite B des erfindungsgemäßen Ladekopfs 12, sodass der Kanal K für den Ladekopf 12 der erfindungsgemäßen Ladevorrichtung 10 vollständig durchlaufbar ist. Der Empfangskopf 112 ist in einem Abschnitt K` des Kanals K mit gleichbleibender Breite ausgebildet.

Üblicherweise wird sich der Ladekopf 12 der Ladevorrichtung 10 nicht genau in einer gewünschten Soll-Richtung R2` auf den Empfangskopf 112 zubewegen, wenn er sich entlang der zweiten Richtung R2 angepresst an den Unterboden des Fahrzeugs bewegt, wie in Bezug auf Fig. 1B beschrieben. Die Soll-Richtung R2` liegt entlang einer Längsachse des Kanals K, insbesondere entlang einer Achsensymmetrieachse als Längsachse. Die zweite Richtung R2 ist durch die Arme 21 und 23 fixiert.

Trifft der Ladekopf 12 während seiner Bewegung auf das V-förmige Innere des Kanals der Führungseinrichtung 118 und presst er in der zweiten Richtung R2 gegen eine Kanalinnenwand 119, kann eine Kraft in eine dritte oder vierte Richtung R3, R4 senkrecht zu der Soll-Richtung R2' und parallel zu der zweiten Oberfläche 113 entstehen. Dadurch kann die Platte P der Anschlussvorrichtung 110 entlang der Stäbe 102 entsprechend in die dritte oder vierte Richtung R3, R4 verschoben werden, bis der Ladekopf 12 in den Abschnitt K` mit gleichbleibender Breite des Kanals K eintritt. Daraufhin findet keine Verschiebung in die dritte oder vierte Richtung R3, R4 mehr statt und der Ladekopf 12 trifft genau in einer vorbestimmten Ausrichtung auf den Empfangskopf 112. Der Ladekopf 12 wird erfindungsgemäß an den Unterboden U des Fahrzeugs, genauer an die Platte P der Anschlussvorrichtung 110 gepresst.

Trifft der Ladekopf 12 während seiner Bewegung in die zweite Richtung R2 derart auf die Führungseinrichtung 118, dass zwischen der zweiten Richtung R2 und der Soll-Richtung R2' ein nicht-verschwindender Winkel besteht, kann auch ein Drehmoment - zusätzlich oder alternativ zu den im vorangehenden Absatz beschriebenen Kräften - auf die Platte P ausgeübt werden. Die Platte ist, wie in den folgenden Figuren 4B und 4C gezeigt, über ein Drehgelenk 132 an den Stäben 102 aufgehängt, sodass das Drehmoment eine vorteilhafte Ausrichtung des Empfangskopfs 112 bewirken kann. Beispielsweise kann so die in Bezug auf den Empfangskopf 112 definierte Soll-Richtung R2` in Übereinstimmung mit der zweiten Richtung R2 gebracht werden. Bei einer von dem Ladekopf 12 bewirkten Drehbewegung der Platte P werden die Federn 104 entsprechend gespannt bzw. gestaucht. In einer Ruhelage halten die Federn 104 den Kanal K in Richtung der Sollrichtung R2' ausgerichtet, welche vorteilhafterweise die Vorwärtsfahrtrichtung des Fahrzeugs ist.

Fig. 4B zeigt eine schematische Draufsicht von oben auf die elektrische Anschlussvorrichtung 110 eines Fahrzeugs zum Laden einer Batterie des Fahrzeugs gemäß der ersten Ausführungsform des zweiten Aspekts der vorliegenden Erfindung.

Wie in Fig. 4B gezeigt, ist die Platte P an einer Rückseite 133 der Platte P, welche von der Oberfläche 113 abgewandt ist, über ein Drehgelenk 132 mit einem Joch 130 verbunden. Vorteilhafterweise ist das Drehgelenk 132 über einem Schwerpunkt der Platte P angeordnet. Durch das Joch 130 sind die beiden Stäbe 102 parallel zueinander und parallel zu der Platte P derart hindurchgeführt, dass sich das Joch 130, welches fest mit der Platte P verbunden ist, entlang der Stäbe 102 bewegen kann. Dadurch ist die Platte P entlang der Stäbe 102 verschiebbar, wie oben beschrieben. Weiterhin ist die Platte P mittels des Drehgelenks 132 um eine Drehachse senkrecht zu der zweiten Oberfläche 113 und senkrecht zu der Rückseite 133 der Platte P drehbar, um einen Eintritt des Ladekopfs 12 in den Abschnitt K` mit gleichbleibender Breite zu erleichtern.

Fig. 4C zeigt eine schematische Draufsicht von vorne, insbesondere aus der Soll-Richtung R2`, auf eine elektrische Anschlussvorrichtung eines Fahrzeugs zum Laden einer Batterie des Fahrzeugs gemäß der ersten Ausführungsform des zweiten Aspekts der vorliegenden Erfindung.

In Fig. 4C sind fünf Führungsschlitze 116 eingezeichnet, in welchen je zwei der zweiten elektrischen Kontakte 114 ausgebildet sind.

Fig. 5A zeigt eine schematische Detailansicht von oben, das heißt aus der Richtung des Fahrzeugs, auf den Empfangskopfs 112 der Anschlussvorrichtung 110 gemäß der ersten Ausführungsform des zweiten Aspekts der vorliegenden Erfindung.

Gemäß Fig. 5A sind die zehn zweiten elektrischen Kontakte 114 parallel zueinander und voneinander beabstandet, sowie senkrecht zu der zweiten Oberfläche 113 ausgebildet. Die zweiten Kontakte 114 sind jeweils innerhalb der fünf Führungsschlitze 116 als elektrisch leitende Streifen ausgebildet. Die je zwei innerhalb desselben Führungsschlitzes 116 angeordneten zweiten Kontakte 114 sind jeweils über zwei klammerförmige Blattfedern 122 miteinander verbunden, je eine Blattfeder 122 an jedem der zwei longitudinalen Enden der beiden Streifen. Die zehn Blattfedern 122 üben jeweils eine Federkraft aus, welche jeden Streifen in Richtung des ihm innerhalb desselben Führungsschlitzes gegenüberliegenden Streifens presst. Somit ist eine besonders gute Kontaktierung möglich, wenn zwischen die beiden Streifen jeweils ein erster Kontakt 14 eingeführt ist.

In longitudinaler Richtung der zweiten elektrischen Kontakte 114, insbesondere also in einer Richtung längs des Kanals K der Anschlussvorrichtung 110, weisen die Streifen zum Inneren des jeweiligen Führungsschlitzes 116 hin abgeschrägte Kanten 117 auf, sodass die ersten elektrischen Kontakte 14 noch leichter zwischen die je zwei zweiten Kontakte 114 in dem Führungsschlitz 116 eindringen können.

Die fünf Führungsschlitze 116, die zehn Blattfedern 122, die zwanzig Schrauben 120 und die zehn zweiten elektrischen Kontakte 114 sind gemäß der vorliegenden Ausführungsform alle gleich ausgebildet. Der Übersichtlichkeit halber wurden daher in Fig. 5A nur jeweils eine Auswahl der Elemente mit Bezugszeichen versehen.

Wie in Bezug auf Fig. 3 besprochen, können die ersten elektrischen Kontakte 14 eine Vielzahl von Funktionen erfüllen. Mit der Konfiguration des Ladekopfs 12 korrespondierend können einer oder mehrere der zweiten Kontakte 114 zum Übertragen von Daten- und/oder Steuersignalen, als Schutzleitung, als Phasenleitung, als Hochspannungsleitung, als Niederspannungsleitung etc. ausgebildet sein.

Auch die zweiten elektrischen Kontakte 114 können innerhalb der Führungsschlitze 116 als jeweils gleich lange Streifen ausgebildet sein. Sie können aber auch, zum Teil oder alle, unterschiedliche Längen aufweisen. Sie können auch, bezüglich einer Richtung längs der Führungsschlitze 116, zum Teil oder alle voneinander versetzt angeordnet sein. Dadurch sind, falls die ersten elektrischen Kontakte 14 etwa alle gleichartig ausgebildet sind, erreicht werden, dass verschiedene Kontakte zeitlich versetzt hergestellt werden, etwa analog wie in Bezug auf Fig. 3 beschrieben.

Zumindest einer der zweiten elektrischen Kontakte 114 ist zum Laden der Batterie des Fahrzeugs mit der Batterie, mittelbar oder unmittelbar verbunden. Es kann als Teil der Anschlussvorrichtung 110 des Fahrzeugs eine Ladevorrichtung ausgebildet sein, welche über einen vorbestimmten der zweiten elektrischen Kontakte 114 bei Kontakt mit einem vorbestimmten der ersten elektrischen Kontakte 14 mittels der ersten Steuereinrichtung der Ladevorrichtung 10 und/oder mittels der zweiten Steuereinrichtung der Anschlussvorrichtung 110 steuerbar ist. Mittels der Ladevorrichtung ist das Laden der Batterie über beispielsweise zwei weitere vorbestimmte zweite elektrische Kontakte 114 steuerbar.

Fig. 5B zeigt eine schematische Detailansicht von vorne auf einen den Empfangskopf der Anschlussvorrichtung gemäß der ersten Ausführungsform des zweiten Aspekts der vorliegenden Erfindung. Aus Fig. 5B ist ersichtlich, dass auch zu der Platte P parallele, von der Platte P fort weisende Kanten der zweiten Kontakte 114 in Richtung des Inneren eines jeweiligen Führungsschlitzes 116 weisende Abschrägungen 117' aufweisen sodass die ersten elektrischen Kontakte 14 noch leichter zwischen die je zwei zweiten Kontakte 114 in dem Führungsschlitz 116 eindringen können.

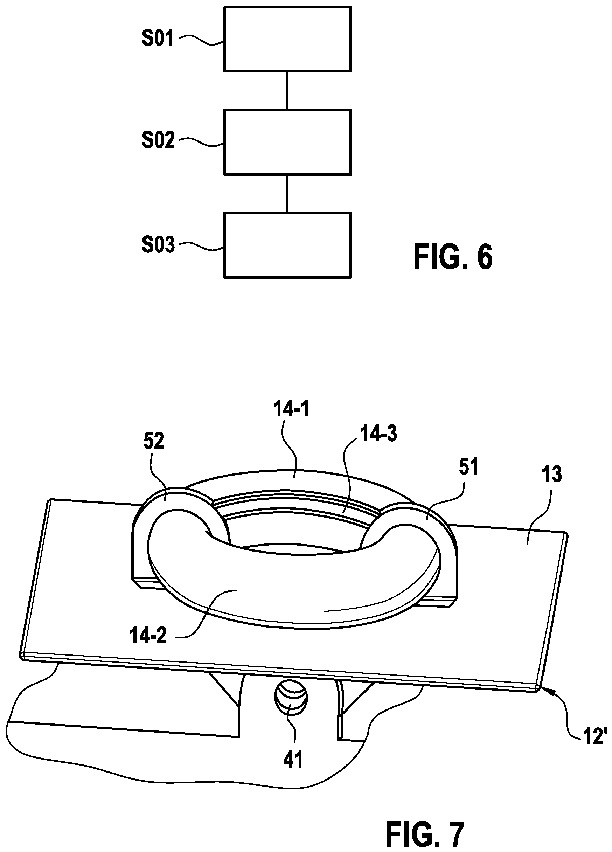

Fig. 6 zeigt ein schematisches Flussdiagramm eines beispielhaften Verfahrens. Für Details und Vorteilhafte Weiterbildungen des beschriebenen Verfahrens wird auf die vorangehenden und nachfolgenden Figuren sowie die dazugehörigen Beschreibungen der erfindungsgemäßen Lade- und Anschlussvorrichtungen verwiesen.

In einem ersten Verfahrensschritt S01 wird die Hebeeinrichtung 11 mittels des Aktors 16 derart aktuiert, dass der mit der Hebeeinrichtung 11 verbundene Ladekopf 12 sich zumindest teilweise in die erste Richtung R1 bewegt und weiterhin derart, dass, falls der Ladekopf in der ersten Richtung auf eine Anschlagsfläche stößt, sich der Ladekopf (12) in die zweite Richtung R2 bewegt.

In einem zweiten Verfahrensschritt S01 wird der sich entlang der Anschlagsfläche U, P bewegende Ladekopfs 12 mittels der Führungseinrichtung 118 in die vorbestimmte Ladeposition bezüglich dem Empfangskopf 112 mit den zweiten elektrischen Kontakten 114 geführt.

In einem dritten Verfahrensschritt S03 wird die Batterie des Fahrzeugs F über die ersten und zweiten elektrischen Kontakte 14, 114 aus der Energiequelle geladen.

Fig. 7 zeigt einen Ladekopf 12' einer elektrischen Ladevorrichtung zum Laden einer Batterie des Fahrzeugs gemäß einer zweiten Ausführungsform des ersten Aspekts der vorliegenden Erfindung.

Bei dem Ladekopf 12' gemäß der zweiten Ausführungsform handelt es sich um eine Variante des Ladekopfs 12 gemäß der ersten Ausführungsform, wobei auf der ersten Oberfläche 13 drei erste elektrische Kontakte 14-1, 14-2, 14-3, oder kurz 14-i, ausgebildet sind. Dazu ist auf der ersten Oberfläche 13 ein leitender Torus ausgebildet, welcher durch zwei elektrisch isolierende Isolierblöcke 51, 52 in zwei elektrisch voneinander getrennte Bereiche geteilt wird, von denen jeder einen einzelnen erster Kontakt 14-1, 14-2 darstellt. Zwischen den Isolierblöcken 51, 52 ist ein weiterer erster Kontakt 14-3 als Bogen ausgebildet und über Verbindungen im Inneren der Isolierblöcke 51, 52 elektrisch kontaktiert.

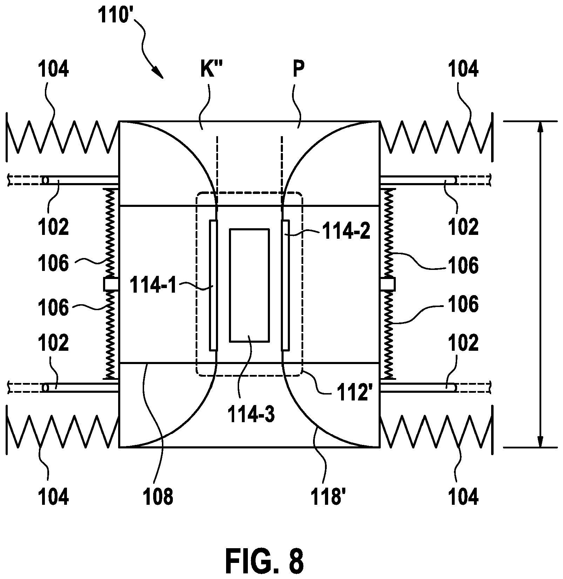

Fig. 8 zeigt eine elektrische Anschlussvorrichtung 110' eines Fahrzeugs zum Laden einer Batterie des Fahrzeugs gemäß einer zweiten Ausführungsform des zweiten Aspekts der vorliegenden Erfindung.

Die elektrische Anschlussvorrichtung 110' ist zur Aufnahme des Ladekopfs 12' gemäß der zweiten Ausführungsform des ersten Aspekts der vorliegenden Erfindung ausgebildet und ist im Wesentlichen eine Variante der Anschlussvorrichtung 110. Die Anschlussvorrichtung 110' weist eine Führungseinrichtung 118' auf, deren Kanal K" sich im Gegensatz zum Kanal K der Führungseinrichtung 118 nicht beidseitig v-förmig, sondern beidseitig trompetenförmig zum Empfangskopf 112' der Anschlussvorrichtung 110' verjüngt. Der Empfangskopf 112' weist drei zweite elektrische Kontakte 114-1, 114-2, 114-3, oder kurz 114-i, auf. Zwei der zweiten Kontakte 114-1, 114-2 sind an Innenwänden des Kanals K" ausgebildet und einer direkt an der Platte P der Anschlussvorrichtung 110' in der Mitte des Kanals K" zwischen den zweiten Kontakten 114-1, 114-2. Die Kontakte 114-1, 114-2, 114-3 sind durch eine Abdeckung 108 geschützt, welche an vier Federn 106 verschiebbar aufgehängt ist.

Die Anschlussvorrichtung 110' gemäß der zweiten Ausführungsform des zweiten Aspekts und die Ladevorrichtung 10' gemäß der zweiten Ausführungsform des zweiten Aspekts der vorliegenden Erfindung können gemeinsam eine zweite Ausführungsform des erfindungsgemäßen Ladesystems darstellen.

Dabei kontaktiert in der vorbestimmten Ladeposition der zweite Kontakt 114-1 den ersten Kontakt 14-1, der zweite Kontakt 114-2 den ersten Kontakt 14-2 und der zweite Kontakt 114-3 den ersten Kontakt 14-3. Der Torus des Ladekopfs 12' wird dazu vollständig in den Kanal K" der Führungseinrichtung 118' eingeführt. Dabei wird die Abdeckung 106 automatisch zurückgeschoben.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise können statt der ersten und zweiten Torsionsfedern 31, 32 auch andere Federn verwendet werden, etwa Spiralfedern mit Längsachsen senkrecht zu den Drehachsen der ersten und zweiten Drehgelenke 41, 42.

Die Führung kann auch als eine glatte, geschmierte Außenfläche ausgebildet sein und der Gleiter kann mit einer glatten Innenseite ausgebildet sein. Der Aktor kann in diesem Fall ein linearer Aktor sein, beispielsweise ein pneumatischer Aktor oder ein magnetischer Aktor. Die Führung der Ladevorrichtung kann auch eine weitere Feder aufweisen, durch welche eine Gegenkraft auf den Gleiter wirkt, wenn er sich dem ersten Lagerblock nähert.

Der Ladekopf der Ladevorrichtung kann durch eine Abdeckung geschützt sein, welche mit Federn an dem Ladekopf 12; 12' aufgehängt ist. Die Abdeckung kann so ausgebildet und die Federn können so gewählt sein, dass bei Anpressen des Ladekopfs etwa gegen die Führungseinrichtung der Anschlussvorrichtung die Abdeckung automatisch zurückgeschoben wird um die ersten elektrischen Kontakte 14; 14-i freizugeben. Auch die Anschlussvorrichtung 110; 110' kann durch eine an Federn aufgehängte Abdeckung geschützt sein, welche bei Anpressen des Ladekopfs 12; 12' an die Abdeckung automatisch zurück geschoben wird, um die zweiten elektrischen Kontakte 114; 114-i freizugeben.

Innenseiten der Abdeckungen an dem Ladekopf 12; 12' und an dem Empfangskopf 112; 112' können so geformt sein, dass die Kontakte 14, 114; 14-i, 114-i formschlüssig abgedeckt werden. Dadurch kann eine Ablagerung von kleinen Fremdobjekten an den Kontakten 14, 114; 14-i, 114-i, beispielsweise von Zigarettenstummeln, verhindert werden. Das formschlüssige Abdecken kann durch eine Abdeckung erreicht werden, welche wie ein Negativ zu den jeweiligen Kontakten 14, 114; 14-i, 114-i geformt ist. Das heißt, die ersten Kontakte 14; 14-i werden abgedeckt mit einer Form, welche wie die zweiten Kontakte 114; 114-i ausgeprägt ist und umgekehrt.

Die Ladevorrichtung kann auch selbst in ein Grube oder einem Gehäuse angeordnet sein, welche bzw. welches nach oben durch eine Fall- oder Schiebetür verschlossen ist, beispielweise um die Ladevorrichtung vor Regen zu schützen. Eine grobe Sensorik kann vorgesehen sein, welche feststellt, ob sich ein zu ladendes Fahrzeug in dem vorbestimmten Bereich um die Ladevorrichtung befindet. Ist dies der Fall, wird automatisch die Fall- oder Schiebetür geöffnet und daraufhin der Aktor der Ladevorrichtung betätigt.

## Patentansprüche

1. Elektrische Ladevorrichtung (10) zum Laden einer Batterie eines Fahrzeugs mit einer Hebeeinrichtung (11), mit welcher ein Ladekopf (12; 12') gekoppelt ist;
wobei die Hebeeinrichtung (11) wie folgt aufgebaut ist:
- ein Aktor (16) und ein Gleiter (20), wobei der Aktor (16) den Gleiter (20) auf einer Welle 18) linear bewegt;
- ein erster Arm (21), an dessen Ende über ein Drehgelenk (41) der Ladekopf (12) gekoppelt ist;
- ein zweiter Arm (22), dessen erstes Ende über ein Drehgelenk (44) mit einem Drehgelenk (43) des Gleiter (20) verbunden und dessen zweites Ende über ein Drehgelenk (44) mit einem dritten Arm (23) verbunden ist;
- das erste Ende des dritten Arms (23) ist über ein Drehgelenk (32) mit dem ersten Arm (21) verbunden und das zweite Ende über ein Drehgelenk (45) mit einem ortsfesten Lagerbock (17);
- die Drehachsen der Drehgelenke (32, 41, 43, 44, 45) sind parallel zueinander
wobei der Ladekopf (12; 12') an oder auf einer ersten Oberfläche (13) des Ladekopfs (12; 12') eine erste Mehrzahl von ersten elektrischen Kontakten (14; 14-1, 14-2, 14-3) aufweist, welche zum Laden der Batterie zumindest zum Teil mit einer Energiequelle verbindbar sind und
dem Aktor (16), mittels welchem die Hebeeinrichtung (11) derart aktuierbar ist, dass der Ladekopf (12; 12') zumindest teilweise in eine erste Richtung (R1), welche im Wesentlichen senkrecht auf der ersten Oberfläche (13) steht, bewegbar ist;
wobei weiterhin die Hebeeinrichtung (11) derart ausgebildet ist, dass beim Auftreffen des Ladekopfs (12) auf eine Anschlagsfläche (U,P), die Bewegung in der ursprünglichen Bewegungsrichtung (R1) gehemmt wird und aufgrund der weiteren Bewegung des dritten Arms (23) der Ladekopf (12) an den Unterboden angepresst und entlang einer zweiten Richtung (R2) bewegt wird, welche im Wesentlichen parallel zu der ersten Oberfläche (13) und senkrecht zu der ersten Richtung (R1) angeordnet ist.
wobei
die erste Mehrzahl der ersten elektrischen Kontakte (14) als zueinander parallele, senkrecht auf der ersten Oberfläche (13) stehende Lamellen ausgebildet sind.

2. Elektrische Ladevorrichtung (10) nach Anspruch 1, **dadurch gekennzeichnet, dass** zumindest eine der Lamellen eine unterschiedliche Länge im Vergleich zu den restlichen Lamellen aufweist und/oder dass zumindest eine der Lamellen in einer Richtung (R2) längs der Lamellen versetzt von den restlichen Lamellen angeordnet ist.

3. Elektrische Ladevorrichtung (10) nach einem der vorangehenden Ansprüche 1 bis 2,
**dadurch gekennzeichnet, dass** der Ladekopf (12) über einen ersten Arm (21) mit der Hebeeinrichtung (11) gekoppelt ist; wobei der erste Arm (21) an einem ersten Ende über eine erste Feder (31) mit dem Ladekopf (12) gekoppelt ist; und an einem zweiten Ende über eine zweite Feder (32) mit der restlichen Hebeeinrichtung (11) gekoppelt ist.

4. Elektrische Ladevorrichtung (10) nach einem der vorangehenden Ansprüche 1 bis 3, **dadurch gekennzeichnet, dass** der Aktor (16) und die Hebeeinrichtung (11) derart ausgebildet sind, dass die Hebeeinrichtung (11) dadurch aktuierbar ist, dass eine lineare Bewegung (LB) eines Gleiters (20) der Hebeeinrichtung (11) durch den Aktor (16) bewirkt wird.

## Claims

1. Electrical charging apparatus (10) for charging a battery of a vehicle, having
a lifting device (11) to which a charging head (12; 12') is coupled;
- wherein the lifting device (11) is constructed as follows:
- an actuator (16) and a slider (20), wherein the actuator (16) linearly moves the slider (20) on a shaft (18);
- a first arm (21), on the end of which the charging head (12) is coupled via a rotary joint (41);
- a second arm (22), the first end of which is connected to a rotary joint (43) of the slider (20) via a rotary joint (44) and the second end of which is connected to a third arm (23) via a rotary joint (44);
- the first end of the third arm (23) is connected to the first arm (21) via a rotary joint (32), and the second end is connected to a positionally fixed bearing block (17) via a rotary joint (45);
- the axes of rotation of the rotary joints (32, 41, 43, 44, 45) are parallel to one another,
wherein, on a first surface (13) of the charging head (12; 12'), the charging head (12; 12') has a first plurality of first electrical contacts (14; 14-1; 14-2; 14-3), at least some of which are connectable to an energy source for the purpose of charging the battery; and having
the actuator (16), by means of which the lifting device (11) is able to be actuated in such a way that the charging head (12; 12') is at least partially movable in a first direction (R1), which is substantially perpendicular to the first surface (13) ;
wherein furthermore the lifting device (11) is designed in such a way that, if the charging head (12) comes into contact with a stop surface (U, P), the movement in the original movement direction (R1) is inhibited and, owing to the further movement of the third arm (23), the charging head (12) is moved pressed against the underbody and along a second direction (R2), which is oriented substantially parallel to the first surface (13) and perpendicular to the first direction (R1),
wherein
the first plurality of the first electrical contacts (14) are in the form of mutually parallel lamellae which are perpendicular to the first surface (13).

2. Electrical charging apparatus (10) according to Claim 1, **characterized in that** at least one of the lamellae has a different length in comparison with the rest of the lamellae, and/or **in that** at least one of the lamellae is arranged offset from the rest of the lamellae in a direction (R2) along the lamellae.

3. Electrical charging apparatus (10) according to either of Claims 1 and 2, **characterized in that** the charging head (12) is coupled to the lifting device (11) via a first arm (21); wherein the first arm (21) is coupled at a first end to the charging head (12) via a first spring (31) and is coupled at a second end to the rest of the lifting device (11) via a second spring (32).

4. Electrical charging apparatus (10) according to one of preceding Claims 1 to 3, **characterized in that** the actuator (16) and the lifting device (11) are designed in such a way that the lifting device (11) is able to actuated **in that** a linear movement (LB) of a slider (20) of the lifting device (11) is effected by the actuator (16).

## Revendications

1. Dispositif de charge électrique (10) pour charger une batterie d'un véhicule, avec un appareil de levage (11) auquel est couplée une tête de charge (12 ; 12') ; l'appareil de levage (11) étant construit comme suit :
- un actionneur (16) et un coulisseau (20), l'actionneur (16) déplaçant linéairement le coulisseau (20) sur un arbre (18) ;
- un premier bras (21) à l'extrémité duquel la tête de charge (12) est couplée par l'intermédiaire d'une articulation tournante (41) ;
- un deuxième bras (22) dont la première extrémité est reliée par l'intermédiaire d'une articulation tournante (44) à une articulation tournante (43) du coulisseau (20) et dont la deuxième extrémité est reliée par l'intermédiaire d'une articulation tournante (44) à un troisième bras (23) ;
- la première extrémité du troisième bras (23) est reliée au premier bras (21) par l'intermédiaire d'une articulation tournante (32) et la deuxième extrémité est reliée à un support fixe (17) par l'intermédiaire d'une articulation tournante (45) ;
- les axes de rotation des articulations tournantes (32, 41, 43, 44, 45) sont parallèles entre eux,
la tête de charge (12 ; 12') présentant, au niveau de ou sur une première surface (13) de la tête de charge (12 ; 12'), une première pluralité de premiers contacts électriques (14 ; 14-1, 14-2, 14-3) qui peuvent être reliés, au moins en partie, à une source d'énergie pour charger la batterie, et
l'actionneur (16), au moyen duquel l'appareil de levage (11) peut être actionné de telle sorte que la tête de charge (12 ; 12') peut être déplacée au moins partiellement dans une première direction (R1) qui est essentiellement perpendiculaire à la première surface (13) ;
l'appareil de levage (11) étant en outre configuré de telle sorte que, lorsque la tête de charge (12) rencontre une surface de butée (U, P), le déplacement dans la direction de déplacement initiale (R1) est inhibé et, en raison du déplacement supplémentaire du troisième bras (23), la tête de charge (12) est pressée contre le plancher inférieur et déplacée le long d'une deuxième direction (R2) qui est essentiellement parallèle à la première surface (13) et perpendiculaire à la première direction (R1),
la première pluralité de premiers contacts électriques (14) étant configurés sous forme de lamelles parallèles entre elles, perpendiculaires à la première surface (13).

2. Dispositif de charge électrique (10) selon la revendication 1, **caractérisé en ce qu'**au moins l'une des lamelles présente une longueur différente en comparaison des autres lamelles et/ou **en ce qu'**au moins l'une des lamelles est agencée en décalage par rapport aux autres lamelles dans une direction (R2) le long des lamelles.

3. Dispositif de charge électrique (10) selon l'une quelconque des revendications 1 à 2 précédentes, **caractérisé en ce que** la tête de charge (12) est couplée à l'appareil de levage (11) par l'intermédiaire d'un premier bras (21) ; le premier bras (21) étant couplé à une première extrémité à la tête de charge (12) par l'intermédiaire d'un premier ressort (31) ; et étant couplé à une deuxième extrémité au reste de l'appareil de levage (11) par l'intermédiaire d'un deuxième ressort (32) .

4. Dispositif de charge électrique (10) selon l'une quelconque des revendications 1 à 3 précédentes, **caractérisé en ce que** l'actionneur (16) et l'appareil de levage (11) sont configurés de telle sorte que l'appareil de levage (11) peut être actionné en provoquant un mouvement linéaire (LB) d'un coulisseau (20) de l'appareil de levage (11) par l'actionneur (16).
